(19) Europäisches Patentamt

European Patent Office

Office européen des brevets

(11) Numéro de publication : **0 293 296 B1**

## FASCICULE DE BREVET EUROPEEN

(12)

(45) Date de publication du fascicule du brevet :
**22.01.92 Bulletin 92/04**

(21) Numéro de dépôt : **88401274.1**

(22) Date de dépôt : **25.05.88**

(51) Int. Cl.⁵ : **B61B 12/10,** H02P 7/68

(54) Dispositif d'entrainement de plusieurs cables d'une installation de transport fonctionnant en synchronisme, et procédé de régulation automatique de l'entrainement en synchronisme de ces cables.

(30) Priorité : **27.05.87 FR 8707653**

(43) Date de publication de la demande :
**30.11.88 Bulletin 88/48**

(45) Mention de la délivrance du brevet :
**22.01.92 Bulletin 92/04**

(84) Etats contractants désignés :
**AT CH DE FR GB IT LI SE**

(56) Documents cités :
**EP-A- 0 140 756**
**EP-A- 0 226 838**
**DE-A- 3 147 096**
**US-A- 3 760 246**
**US-A- 3 789 280**

(73) Titulaire : **POMAGALSKI S.A.**
**11, rue René Camphin**
**F-38600 Fontaine (FR)**

(72) Inventeur : **Bertrand, Jean-Jacques**
**"Les Côtes"**
**F-38360 Sassenage (FR)**

(74) Mandataire : **Derambure, Christian**
**BUGNION ASSOCIES 4 square Jean Moulin**
**F-73100 Aix les Bains (FR)**

Jouve, 18, rue Saint-Denis, 75001 PARIS

## Description

L'invention concerne l'entraînement à défilement continu en synchronisme dans le même sens de plusieurs câbles parallèles au moins tracteurs d'une installation de transport comportant en fonctionnement au moins un véhicule accouplé en ligne auxdits câbles au moins tracteurs.

On sait déjà qu'un des problèmes rencontrés dans la réalisation d'une installation de transport à plusieurs câbles aériens porteurs-tracteurs comportant au moins un véhicule accouplé à tous ces câbles porteurs-tracteurs ou tracteurs, réside dans la nécessité d'entraîner les câbles en synchronisme parfait.

Une solution a été proposée dans le brevet français 2430901 qui préconise des boucles de câbles parfaitement identiques, un accouplement de chaque véhicule aux câbles par deux paires de pinces de façon à former un quadrilatère rigide imposant l'entraînement synchrone des câbles, et un dispositif différentiel mécanique, hydraulique ou électrique au niveau des moteurs d'entraînement. Cette solution n'était cependant pas satisfaisante car elle imposait des boucles de câbles strictement identiques, ce qui n'est jamais le cas en pratique, du fait des contraintes de trajectoires qu'il n'est pas toujours possible de respecter.

Le brevet européen 93.680 enseigne également qu'il est nécessaire de prévoir deux boucles de câbles strictement identiques, de former un quadrilatère rigide d'association des véhicules aux câbles, et d'entraîner les câbles grâce à deux moteurs à courant continu rigoureusement identiques alimentés à partir d'une même source d'alimentation électrique à puissance constante grâce à un dispositif différentiel électrique. Le brevet français 2552716 précise comment on peut réaliser un tel différentiel électrique en incorporant en série des résistances de valeurs fixes dans les circuits d'induit des deux moteurs, alimentés en parallèle à partir d'une même source de courant continu. Là encore on a constaté qu'il n'est pas possible en pratique de réaliser deux boucles de câbles identiques. Par ailleurs, le différentiel électrique réalisé grâce à des résistances s'est avéré faire l'objet de phénomènes de résonnances et a comme inconvénient qu'il n'est pas possible de contrôler l'alimentation électrique de chaque moteur. On a ainsi constaté en pratique que les cabines suspendues aux câbles sont parfois sujettes à des mouvements pendulaires de forte amplitude dans un plan transversal aux câbles, ce qui nuit au confort et à la sécurité des passagers. Par ailleurs, les essais réalisés avec le dispositif différentiel selon le brevet français 2 552 726 sur des installations dont le parcours est sinueux ont montré qu'un tel dispositif est absolument insuffisant pour assurer un entraînement synchrone des deux câbles.

L'invention vise donc à remédier aux inconvénients ci-dessus cités des installations connues et a pour objet d'assurer l'entraînement synchrone de plusieurs câbles au moins tracteurs d'une installation de transport à câbles, et ce même lorsque les boucles de câbles sont différentes, par exemple lorsque le parcours de l'installation est sinueux ou tourmenté. Un autre objet de l'invention est de supprimer totalement les phénomènes de résonnance ou parasites entre les moyens d'entraînement des câbles. Un autre objet de l'invention est de permettre le contrôle et la commande de l'entraînement d'une boucle de câble indépendamment des autres.

Pour ce faire, l'invention propose un dispositif à défilement continu en synchronisme dans le même sens de plusieurs câbles parallèles au moins tracteurs d'une installation de transport comportant en fonctionnement au moins un véhicule accouplé en ligne auxdits câbles au moins tracteurs, et des moyens d'entraînement séparés de chaque câble indépendamment des autres, caractérisé en ce qu'il comporte des sources d'énergie séparées alimentant chaque moyen d'entraînement indépendamment des autres, des moyens de pilotage de la vitesse d'entraînement d'au moins un moyen d'entraînement d'un câble en fonction des différents efforts d'entraînement mesurés des différents moyens d'entraînement, les moyens de pilotage agissant sur la vitesse d'entraînement d'au moins un moyen d'entraînement pour ramener les différents efforts d'entraînement des câbles à des valeurs correspondant à des vitesses de défilement égales des câbles.

L'invention propose également un dispositif d'entraînement à défilement continu en synchronisme dans le même sens de deux câbles aériens sans fin parallèles porteurs-tracteurs d'une installation de transport à câbles aériens comportant en fonctionnement au moins un véhicule accouplé en ligne — notamment une série de véhicules tels que des cabines régulièrement espacés et répartis le long de la ligne — auxdits câbles, et deux moyens d'entraînement séparés indépendants un pour chaque câble, caractérisé en ce qu'il comporte deux sources d'énergie séparées alimentant chaque moyen d'entraînement indépendamment de l'autre, des moyens de détection d'une variation de l'effort d'entraînement d'au moins un câble par rapport à l'effort initial pour lequel les câbles défilent à la même vitesse qui est leur vitesse nominale, et des moyens émettant au moins un signal S de correction de la vitesse d'entraînement d'au moins un des deux câbles, ce signal S étant proportionnel en valeur absolue à la variation détectée dans l'effort d'entraînement d'au moins un câble et corrigeant la vitesse dans l'effort d'entraînement d'au moins un câble et corrigeant la vitesse dans le sens d'un retour de l'effort à sa valeur initiale.

De préférence, les moyens de détection sont susceptibles de détecter la variation de l'effort de chacun des câbles, et par exemple détectent une variation D de la différence Δ E entre les efforts d'entraînement des câbles par rapport à la différence initiale Δ Eo entre ces efforts pour laquelle les vitesses des câbles sont égales, et les moyens d'émission émettent un signal S de correction de vitesse proportionnel en valeur absolue à cette variation D, la correction se faisant dans le sens d'une annulation de la variation D.

L'invention concerne également un procédé de régulation automatique de l'entraînement à défilement continu en synchronisme dans le même sens de plusieurs câbles parallèles au moins tracteurs d'une installation de transport comportant en fonctionnement au moins un véhicule accouplé en ligne auxdits câbles au moins tracteurs, lesdits câbles étant entraînés à défilement indépendamment les uns des autres par des dispositifs d'entraînement propres à chaque câble, caractérisé en ce que lesdits câbles étant entraînés à défilement par les moyens d'entraînement à partir de sources d'énergie propres à chaque câble, on mesure en permanence l'effort nécessaire à l'entraînement de chacun des câbles et on pilote la vitesse d'entraînement d'au moins un des câbles en fonction des efforts mesurés de sorte que les différents efforts nécessaires à l'entraînement des différents câbles correspondent à des vitesses de défilement égales des câbles.

L'invention concerne également un procédé de régulation automatique de l'entraînement à défilement continu en synchronisme dans le même sens de deux câbles aériens, sans fin, parallèles, porteurs tracteurs, d'une installation de transport à câbles aériens comportant en fonctionnement au moins un véhicule accouplé en ligne — notamment une série de véhicules régulièrement espacés et répartis le long de la ligne — auxdits câbles, chaque câble étant entraîné à défilement par un dispositif d'entraînement propre à chaque câble, distinct et indépendant du moyen d'entraînement propre à l'autre câble, caractérisé en ce que chaque câble étant entraîné à défilement par un moyen d'entraînement à partir d'une source d'énergie propre à ce câble, et distincte et indépendante du dispositif d'entraînement et de la source d'énergie propre à l'autre câble, on mesure en permanence l'effort nécessaire à l'entraînement de chaque câble, on effectue la différence Δ E entre ces efforts et, on compare cette différence Δ E mesurée à une valeur initiale Δ Eo pour laquelle les vitesses des câbles sont égales, et on corrige la vitesse d'entraînement d'au moins un des deux câbles dès que la différence Δ E mesurée est différente de la différence Δ Eo initiale, pour rétablir l'égalité entre ces différences Δ E et Δ Eo.

L'invention permet ainsi d'obtenir des vitesses de câbles absolument identiques et ce même lorsque les boucles de câbles sont différentes. De plus, les alimentations en énergie entre les différents moyens d'entraînement étant séparées, et ces différents moyens d'entraînement étant propres à chaque câble, on supprime totalement les phénomènes de résonnance ou les phénomènes parasites entre ces différents moyens d'entraînement. De plus, avec un dispositif selon l'invention, on peut commander l'entraînement de chaque câble indépendamnent des autres.

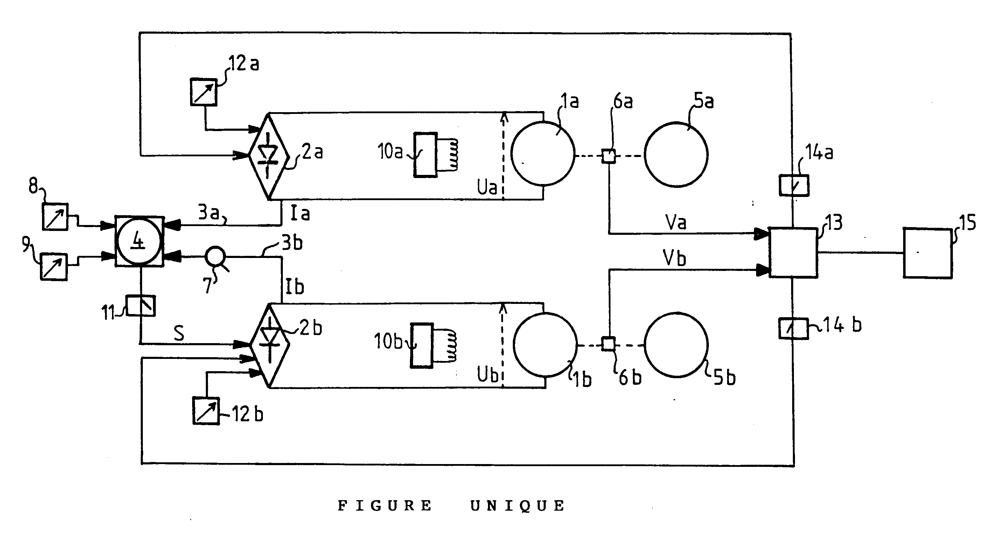

D'autres caractéristiques et avantages de l'invention apparaîtront à la la lecture de la description suivante se référant à la figure annexée qui représente un schéma électrique d'un dispositif d'entraînement selon un mode de réalisation préférentiel de l'invention.

Bien qu'applicable à toutes sortes d'installations de transport à câbles dès lors qu'elles comportent plusieurs câbles parallèles au moins tracteurs et en fonctionnement au moins un véhicule, chaque véhicule étant accouplé en ligne à ces dits câbles au moins tracteurs, l'invention est plus particulièrement destinée à l'entraînement d'une installation de transport à deux câbles aériens sans fin parallèles porteurs-tracteurs. Le dispositif d'entraînement représenté sur la figure permet donc d'entraîner de tels câbles par défilement continu en synchronisme dans le même sens.

Les véhicules étant accouplés, le cas échéant de façon débrayable, à tous les câbles au moins tracteurs, réalisent entre ces câbles une liaison mécanique. De ce fait, les câbles défilent à même vitesse et l'effort de traction des véhicules est également réparti entre les deux câbles. Dans ce cas, la différence Δ E entre les efforts d'entraînement des câbles est la même que la différence initiale Δ Eo entre ces efforts lorsque les câbles défilent à même vitesse mais à vide, sans véhicule accouplé à ces câbles. Par contre, lorsque l'un des câbles est entraîné à plus grande vitesse que les autres, il supporte une plus grande partie de l'effort de traction des véhicules. Dans ce cas, la différence Δ E entre les efforts d'entraînement des différents câbles n'est plus la même que la différence initiale Δ Eo des efforts d'entraînement des câbles par défilement en synchronisme sans véhicule.

L'invention partant de cette constatation consiste donc à mesurer l'effort d'entraînement des câbles et à modifier la vitesse d'entraînement d'un câble lorsque la différence entre les efforts d'entraînement varie. En particulier, on peut diminuer la vitesse d'entraînement d'un câble qui supporte une trop grande partie de l'effort d'entraînement et/ou augmenter la vitesse d'entraînement d'un câble qui supporte une trop faible partie de l'effort d'entraînement.

Le dispositif d'entraînement représenté sur la figure comporte deux moyens 1a, 1b d'entraînement séparés indépendants des câbles, un pour chaque câble, deux sources d'énergie 2a, 2b séparées, alimentant chaque moyen 1a, 1b d'entraînement respectivement indépendamment de l'autre, des moyens 3 de détection d'une variation des efforts d'entraînement des câbles par rapport aux efforts initiaux pour lesquels les câbles défilent à la même vitesse qui est leur vitesse nominale, et des moyens 4 émettant au moins un signal S de correction de la vitesse d'entraînement d'au moins un des deux câbles, ce signal S étant proportionnel en valeur absolue à la variation détectée dans les efforts d'entraînement des câbles et corrigeant la vitesse dans le sens d'un retour des efforts d'entraînement à leurs valeurs initiales.

Chaque moyen 1 d'entraînement est constitué d'un moteur à courant continu entraînant en rotation une poulie motrice 5a, 5b d'un câble. Chaque source d'énergie 2 est constituée d'une alimentation électrique indépendante en courant continu — notamment à ponts de thyristors —.

On sait que dans un moteur à courant continu le courant I circulant dans le circuit d'induit est proportionnel au couple fourni par le moteur, c'est-à-dire à l'effort d'entraînement du câble passant dans la poulie motrice entraînée en rotation par le moteur à courant continu. De même, on sait également que la tension d'alimentation du circuit induit est proportionnelle à la vitesse de rotation de ce moteur, c'est-à-dire à celle de la poulie motrice qui lui est connectée et donc à la vitesse de défilement du câble passant dans la poulie motrice.

Les moyens 4 d'émission sont donc de préférence des moyens d'émission d'au moins un signal S de correction de la tension d'alimentation d'induit U d'au moins un des moteurs 2, ce signal S étant proportionnel en valeur absolue à la différence D entre la différence mesurée $\Delta$ I entre les intensités d'induit des deux moteurs, et la différence initiale $\Delta$ Io entre ces intensités pour laquelle les vitesses des câbles sont égales, la correction de tension se faisant dans le sens d'une annulation de la différence D.

Si la différence $\Delta$ I = $I_a$ − $I_b$ augmente, le signal S de correction émis par les moyens 4 d'émission est tel que la différence $\Delta$ U = $U_a$ − $U_b$ entre les tensions d'alimentation d'induit des moteurs 2 diminue, de sorte que la différence $\Delta$ V = $V_a$ − $V_b$ entre les vitesses des câbles diminue. En effet, si $\Delta$ I augmente, cela signifie que la différence $\Delta$ E entre les efforts d'entraînement augmente également. Du fait de la connection mécanique réalisée par les véhicules entre les câbles, cette augmentation de la différene $\Delta$ E entre les efforts est nécessairement dûe à une augmentation de la différence $\Delta$ V entre les vitesses.

Bien entendu, si réciproquement $\Delta$ I diminue, le signal S est tel que la différence $\Delta$ U augmente de sorte que la différence $\Delta$ V entre les vitesses des câbles augmente.

Selon l'invention, le dispositif d'entraînement comporte des moyens 6a, 6b de mesure de la vitesse d'entraînement $V_a$, $V_b$ des câbles, et des moyens 7 de réglage initial du signal S émis par les moyens 4 d'émission, ces moyens 7 de réglage permettant d'étalonner les moyens 4 d'émission en fonction de la valeur initiale $\Delta$ Eo entre les efforts d'entraînement —

notamment en fonction de la valeur initiale $\Delta$ Io entre les intensités d'induit —.

De préférence, les moyens 3, 4 de pilotage de la vitesse — notamment de la tension d'alimentation — agissent sur la vitesse d'entraînement de tous les câbles sauf un, le câble dont la vitesse — notamment la tension d'alimentation — n'est pas piloté, faisant fonction de référence et étant entraîné à la vitesse nominale. Par exemple, dans le cas de deux câbles, seul un des moteurs d'entraînement 1b est piloté en tension par le signal S émis par les moyens 4 d'émission. Cependant, le signal S est émis en fonction des courants $I_a$, $I_b$ circulant dans les deux circuits d'induit des deux moteurs 1a, 1b.

De préférence, les moyens 4 d'émission d'au moins un signal S de correction comportent des moyens 8 de réglage de la vitesse de réaction avec laquelle ils émettent un signal S après détection d'une variation D.

De même, les moyens 4 d'émission d'au moins un signal S de correction comportent des moyens 9 de réglage du gain d'amplification de la valeur absolue du signal S en fonction de la variation D. Ces moyens 8, 9 de réglage permettent d'adapter le temps de réponse et le gain d'amplification des moyens 4 d'émission en fonction des caractéristiques extérieures de l'installation de transport pour réaliser une régulation automatique convergente.

Les deux moteurs 1a, 1b, à courant continu sont de préférence à excitation séparée 10a, 10b. Les deux moteurs 1a, 1b, sont de préférence identiques. Les excitations 10a, 10b sont de préférence réglables. Les alimentations électriques 2a, 2b des moteurs 1a, 1b sont constituées classiquement de ponts de thyristors. Dans de tels ponts de thyristors, on sait qu'il est possible d'accéder directement au courant $I_a$ $I_b$ circulant dans les circuits d'induit. Les moyens de détection sont donc dans ce cas constitués de simples connecteurs 3a, 3b, reliés aux ponts de thyristors 2a, 2b, de façon à fournir aux moyens 4 d'émission les valeurs des courants $I_a$, $I_b$ circulant dans les circuits d'induit des deux moteurs 1a, 1b. Les moyens 4 d'émission sont des moyens électroniques pour effectuer la différence $\Delta$ I = $I_a$ − $I_b$ entre les intensités d'induit fournies par les moyens 3a, 3b, de connection, et constituer un signal S proportionnel à la différence I qu'ils ont effectuée. Les moyens 4 d'émission sont donc essentiellement constitués d'un circuit soustracteur suivi d'un circuit amplificateur. Le signal S émis par les moyens 4 d'émission est fourni à l'un 2b des ponts de thyristors par l'intermédiaire d'un interrupteur 11. Ce signal S est connecté au pont de thyristors 2b de façon à en modifier la tension de sortie $U_b$, et donc la vitesse d'entraînement $V_b$ du moteur 1b et du câble correspondant.

Par ailleurs, les ponts de thyristors 2a, 2b sont commandés en tension par des moyens de réglage manuels 12a, 12b, qui permettent à l'utilisateur de faire varier la vitesse de l'un et/ou l'autre des moteurs 1a, 1b.

Par ailleurs, les moyens 6a, 6b de mesure de la vitesse $V_a$, $V_b$ des moteurs 1a, 1b sont par exemple constitués de dynamo-tachymétriques qui fournissent respectivement les signaux de vitesse réelle $V_a$, $V_b$ à un comparateur de vitesse 13. Ce comparateur de vitesses est susceptible de commander également les ponts de thyristors 2a, 2b, en tension par l'intermédiaire d'interrupteurs 14a, 14b.

L'homme du métier sait réaliser les différentes fonctions mentionnées ci-dessus par des circuits électroniques appropriés. Les différents circuits permettant de réaliser les moyens mentionnés ci-dessus ne seront donc pas décrits plus en détail.

Le dispositif d'entraînement décrit ci-dessus fonctionne de la façon suivante :

Au démarrage de l'installation, ou avant la mise en place et l'accouplement des véhicules aux câbles, on ouvre les interrupteurs 11, 14a et 14b de sorte que les moyens 4 d'émission et le comparateur de vitesse sont inactifs et on lance les moteurs 1a, 1b en affichant dans les moyens de réglage 12a, 12b la vitesse désirée qui est la vitesse nominale de l'installation. Bien entendu, on affiche la même vitesse pour les moyens de réglage 12a d'un câble et pour les moyens de réglage 12b de l'autre câble. On ferme ensuite les interrupteurs 14a et 14b, ce qui a pour effet de rendre actif le comparateur 13 de vitesse. Si les deux vitesses $V_a$ et $V_b$ sont égales et correspondent à la vitesse nominale, le comparateur 13 ne modifie pas la tension d'alimentation des ponts de thyristors 2a, 2b. Au contraire, si l'une ou l'autre des vitesses $V_a$ ou $V_b$ est différente de la vitesse nominale désirée, le comparateur 13 émettra un signal correspondant modifiant la tension d'alimentation du pont de thyristors 2a, 2b correspondant afin d'ajuster la vitesse d'entraînement à la valeur désirée. Le comparateur de vitesse 13 est donc également un correcteur de vitesse. Un tel circuit corrigeant la vitesse d'un moteur à courant continu en fonction de sa vitesse réelle mesurée est déjà connu de l'état la technique.

Lorsque cette dernière opération est effectuée, on est donc certain que, à vide, les deux câbles défilent à la même vitesse. On ouvre alors les interrupteurs 14a, 14b, pour mettre hors circuit le comparateur 13. On ferme ensuite l'interrupteur 11 de façon à fournir le signal S de correction au pont de thyristors 2b. Dans cette situation, ce signal S devrait être nul et ne pas avoir d'effet sur le pont de thyristors 2b, puisque les vitesses $V_a$, $V_b$ sont égales et correspondent à la vitesse nominale. Par conséquent, si tel n'est pas le cas, et si l'on constate une variation de la vitesse $V_b$ grâce à des moyens d'affichage de la vitesse connectés au comparateur 13, on agit sur les moyens 7 de réglage initial du signal S afin de l'étaloner à la valeur O. Ces moyens 7 de réglage peuvent être par exemple constitués de moyens modifiant la valeur du signal d'intensité $I_b$ fourni aux moyens 4 d'émission par les moyens de détection 3b. Les moyens 7 de réglage ont alors pour effet d'égaler les deux signaux d'intensité fournis aux moyens 4 d'émission. L'étalonnage de ces moyens 4 d'émission par les moyens 7 de réglage de la valeur initiale du signal S peut être réalisé de façon automatique grâce au circuit comparateur 13, si l'on prévoit dans ce circuit comparateur des moyens pour émettre un signal de correction aux moyens 7 de réglage. L'étalonnage peut également être réalisé de façon manuelle en agissant directement sur les moyens 7 de réglage en fonction de la valeur lue sur les moyens d'affichage 15 de la vitesse.

Un tel étalonnage est primordial puisque les courants $I_a$ et $I_b$ du circuit d'induit des moteurs ne sont pas forcément les mêmes lorsque les câbles défilent à même vitesse à vide. En effet, les boucles de câbles ne sont pas forcément identiques.

L'étalonnage étant effectué, les moyens 4 d'émission fournissent un signal S nul au pont de thyristors 2b et les vitesses de défilement des deux câbles sont les mêmes et égales à la vitesse nominale affichée sur les moyens de réglage 12a, 12b. On peut alors accoupler les véhicules aux câbles, soit directement s'il s'agit d'une installation à véhicules accouplés de façon débrayable, soit en arrêtant l'installation dans le cas contraire. Lorsque les véhicules sont accouplés en ligne aux câbles, il se peut alors que des perturbations apparaissent dans l'entraînement des câbles. Ces perturbations seront automatiquement détectées par une variation des courants d'induit $I_a$, $I_b$, et compensées par le signal S fourni au pont de thyristors 2b et qui aura pour effet de modifier la tension d'alimentation $U_b$ du moteur 1b, c'est-à-dire sa vitesse d'entraînement $V_b$ pour résorber la perturbation. Par exemple, si le câble associé au moteur 1a prend de l'avance, le moteur 1a supportera un couple plus important, et l'intensité $I_a$ d'induit augmentera en conséquence. La différence $\Delta I = I_a - I_b$ augmentera proportionnellement, et donc le signal S et de façon positive. En conséquence, la tention $U_b$ augmentera ce qui aura pour effet d'augmenter la vitesse $V_b$ jusqu'à ce que le câble connecté au moteur 1b rattrape le câble connecté au moteur 1a. Les autres cas de figure se déduisent de façon évidente de celui décrit ci-dessus.

Par un procédé de régulation automatique de l'entraînement à défilement continu en synchronisme dans le même sens de plusieurs câbles parallèles au moins tracteurs d'une installation de transport selon l'invention, on mesure et on effectue la différence $\Delta I$ des intensités d'induit de deux moteurs 1a, 1b, on compare cette différence mesurée I à une différence initiale Io pour laquelle on a préalablement déterminé que les vitesses des câbles correspondant sont les mêmes, et on pilote la tension d'alimentation d'au moins un des moteurs 1a, 1b pour que la différence Δ I mesurée reste en permanence égale à la différence Io initiale.

Pour déterminer la différence initiale Eo entre les efforts — notamment représentée par la diférence initiale Io entre les intensités d'induit — on entraîne les câbles à défilement à même vitesse sans aucun véhicule accouplé aux câbles, on mesure les vitesses des câbles et on corrige la vitesse d'au moins un câble pour que tous les câbles défilent en synchronisme à vitesse sensiblement constante égale à la vitesse nominale de l'installation, et on mesure les efforts — notamment les intensités d'induit — nécessaires à l'entraînement des câbles dans ces conditions. On corrige alors l'étalonnage des moyens 4 d'émission par les moyens 7 de réglage de façon que le signal S de correction émis par ces moyens 4 d'émission soit nul dans ces conditions.

De préférence, dans un procédé selon l'invention, on pilote la vitesse — notamment la tension d'alimentation — de tous les câbles sauf un, le câble dont la vitesse — notamment la tension d'alimentation — n'est pas pilotée faisant fonction de référence et étant entraîné à la vitesse nominale d'entraînement des véhicules en ligne. Ce fonctionnement en maître-esclave n'est pas obligatoire, et on peut imaginer que les moyens 4 d'émission fournissent deux signaux $S_a$, $S_b$ aux deux ponts de thyristors 2a, 2b pour en piloter la tension d'alimentation simultanément et en sens inverses.

## Revendications

1. Dispositif d'entraînement à défilement continu en synchronisme dans le même sens de plusieurs câbles parallèles au moins tracteurs d'une installation de transport comportant en fonctionnement au moins un véhicule accouplé en ligne auxdits câbles au moins tracteurs, et des moyens (1) d'entraînement séparés de chaque câble indépendamment des autres, caractérisé en ce qu'il comporte des sources d'énergie séparées alimentant chaque moyen (1) d'entraînement indépendamment des autres, des moyens de pilotage de la vitesse d'entraînement d'au moins un moyen (1) d'entraînement d'un câble en fonction des différents efforts d'entraînement mesurés des différents moyens d'entraînement, les moyens de pilotage agissant sur la vitesse d'entraînement d'au moins un moyen (1) d'entraînement pour ramener les différents efforts d'entraînement des câbles à des valeurs correspondant à des vitesses de défilement égales des câbles.

2. Dispositif d'entraînement à défilement continu en synchronisme dans le même sens de deux câbles aériens sans fin, parallèles proteurs-tracteurs d'une installation de transport comportant en fonctionnement au moins un véhicule accouplé en ligne — notamment une série de véhicules tels que des cabines, régulièrement espacés et répartis le long de la ligne — auxdits câbles, et deux moyens (1a, 1b) d'entraînement séparés, indépendants, un pour chaque câble, caractérisé en ce qu'il comporte deux sources d'énergie (2a, 2b) séparées alimentant chaque moyen (1a, 1b) d'entraînement indépendamment de l'autre, des moyens (3) de détection d'une variation de l'effort d'entraînement d'au moins un câble par rapport à l'effort initial pour lequel les câbles défilent à la même vitesse qui est leur vitesse nominale, et des moyens (4) émettant au moins un signal S de correction de la vitesse d'entraînement d'au moins un des deux câbles, ce signal étant proportionnel en valeur absolue à la variation détectée dans l'effort d'entraînement d'au moins un câble et corrigeant la vitesse dans le sens d'un retour de l'effort à sa valeur initiale.

3. Dispositif selon la revendication 2, caractérisé en ce que les moyens (3) de détection sont susceptibles de détecter la variation de l'effort de chacun des câbles.

4. Dispositif selon la revendication 3, caractérisé en ce que les moyens (3) de détection détectent une variation D de la différence Δ E entre les efforts d'entraînement des câbles par rapport à la différence initiale Δ Eo entre ces efforts pour laquelle les vitesses des câbles sont égales, et en ce que les moyens (4) d'émission émettent un signal S de correction de vitesse proportionnel en valeur absolue à cette variation D, la correction se faisant dans le sens d'une annulation à la variation D.

5. Dispositif selon l'une quelconque des revendications 1 à 4 caractérisé en ce que chaque moyen (1) d'entraînement est constitué d'un moteur à courant continu entraînant en rotation une poulie motrice (5) d'un câble, chaque source d'énergie (2) est constituée d'une alimentation électrique indépendante en courant continu — notamment à ponts de thyristors —, et en ce que le dispositif comporte des moyens (4) d'émission d'au moins un signal S de correction de la tension d'alimentation d'induit U d'au moins un des moteurs (2), ce signal S étant proportionnel en valeur absolue à la différence D entre la différence mesurée Δ I entre les intensités d'induits des deux moteurs (2) et la différence initiale Δ Io entre ces intensités pour laquelle les vitesses des câbles sont égales, la correction de tension se faisant dans le sens d'une annulation de la différence D.

6. Dispositif selon la revendication 5, caractérisé en ce que si $\Delta I = I_a - I_b$ augmente, le signal S est tel que la différence $\Delta U = U_a - U_b$ entre les tensions d'alimentation d'induit des moteurs (2) diminue, de sorte que la différence $\Delta V = V_a - V_b$ entre les vitesses des câbles diminue.

7. Dispositif selon l'une quelconque des revendications 4 à 6 caractérisé en ce qu'il comporte des moyens (6) de mesure de la vitesse d'entraînement des câbles, et des moyens (7) de réglage initial du signal S émis par les moyens (4) d'émission, ces moyens (7) de réglage permettant d'étalonner les moyens (4) d'émission en fonction de la valeur initiale de la différence Δ Eo entre les efforts d'entraînement — notamment en fonction de la valeur initiale de la différence Δ Io entre les intensités d'induit —.

8. Dispositif selon l'une quelconque des revendications 1 à 7, caractérisé en ce que les moyens (3, 4) de pilotage de la vitesse — notamment de la tension d'alimentation — agissent sur la vitesse d'entraînement de tous les câbles sauf un, le câble dont la vitesse — notamment la tension d'alimentation — n'est pas pilotée faisant fonction de référence et étant entraîné à la vitesse nominale.

9. Dispositif selon l'une quelconque des revendications 4 à 8, caractérisé en ce que les moyens (4) d'émission d'au moins un signal S de correction comportent des moyens (8) de réglage de la vitesse de réaction avec laquelle ils émettent un signal S après détection d'une variation D.

10. Dispositif selon l'une quelconque des revendications 4 à 9, caractérisé en ce que les moyens (4) d'émission d'au moins un signal S de correction comportent des moyens (9) de réglage du gain d'amplification de la valeur absolue du signal S en fonction de la variation D.

11. Procédé de régulation automatique de l'entraînement à défilement continu en synchronisme dans le même sens de plusieurs câbles parallèles au moins tracteurs d'une installation de transport comportant en fonctionnement au moins un véhicule accouplé en ligne auxdits câbles au moins tracteurs, lesdits câbles étant entraînés à défilement indépendamment les uns des autres par des moyens d'entraînement propres à chaque câble, caractérisé en ce que lesdits câbles étant entraînés à défilement par les moyens d'entraînement à partir de sources d'énergie propres à chaque câble, on mesure en permanence l'effort nécessaire à l'entraînement de chacun des câbles et on pilote la vitesse d'entraînement d'au moins un des câbles en fonction des efforts mesurés, en agissant sur cette vitesse pour ramener les différents efforts nécessaires à l'entraînement des différents câbles à des valeurs correspondant à des vitesses de défilement égales des câbles.

12. Procédé de régulation automatique de l'entraînement à défilement continu en synchronisme dans le même sens de deux câbles aériens, sans fin, parallèles, porteurs-tracteurs, d'une installation de transport comportant en fonctionnement au moins un véhicule accouplé en ligne — notamment une série de véhicules régulièrement espacés et répartis le long de la ligne — auxdits câbles, chaque câble étant entraîné à défilement par un moyen (1a, 1b) d'entraînement propre à ce câble distinct et indépendant du moyen (1a, 1b) d'entraînement propre à l'autre câble, caractérisé en ce que chaque câble étant entraîné à défilement par un moyen (1a, 1b) d'entraînement à partir d'une source d'énergie (2a, 2b) propre à ce câble et distincte et indépendante du moyen (1a, 1b) d'entraînement et de la source d'énergie (2a, 2b) propre à l'autre câble, on mesure en permence l'effort nécessaire à l'entraînement de chaque câble, on effectue la différence Δ E entre ces efforts, on compare cette différence Δ E mesurée à une valeur initiale Δ Eo pour laquelle les vitesses des câbles sont égales, et on corrige la vitesse d'entraînement d'au moins un des deux câbles dès que la différence Δ E mesurée est différente de la différence Δ Eo initiale pour rétablir l'égalité entre ces différences Δ E et Δ Eo.

13. Procédé selon l'une quelconque des revendications 11 et 12, caractérisé en ce que l'installation comprenant un moteur à courant continu (1) d'entraînement par câble et une alimentation électrique (2) par moteur à courant continu, on mesure et on effectue la différence Δ I des intensités d'induit de deux moteurs (1a, 1b), on compare cette différence mesurée Δ I à une différence initiale Δ Io pour laquelle on a préalablement déterminé que les vitesses des câbles correspondant sont les mêmes, et on pilote la tension d'alimentation d'au moins un des moteurs (1) pour que la différence Δ I mesurée reste en permanence égale à la différence Δ Io initiale.

14. Procédé selon l'une quelconque des revendications 12 et 13 caractérisé en ce que pour déterminer la différence initiale Δ Eo entre les efforts, — notamment représentée pour la différence initiale Δ Io entre les intensités d'induit —, on entraîne les câbles à défilement à même vitesse sans aucun véhicule accouplé aux câbles, on mesure les vitesses des câbles et on corrige la vitesse d'au moins un câble pour que tous les câbles défilent en synchronisme à vitesse sensiblement constante égale à la vitesse nominale de l'installation, et on mesure les efforts — notamment les intensités d'induit — nécessaires à l'entraînement des câbles dans ces conditions.

15. Procédé selon l'une quelconque des revendications 11 à 14, caractérisé en ce que l'on pilote la vitesse — notamment la tension d'alimentation — de tous les câbles sauf un, le câble dont la vitesse — notamment la tension d'alimentation — n'est pas pilotée faisant fonction de référence et étant entraîné à la vitesse nominale d'entraînement des véhicules en ligne.

**Patentansprüche**

1. Vorrichtung für den kontinuierlich ablaufenden synchronen Antrieb mehrerer paralleler Seile, zumindest Zugseile einer Transportanlage, in derselben Richtung, wobei die Vorrichtung im Betrieb zumindest ein in einer Linie an die zumindest als Zugseile ausgebildeten Seile angekoppeltes Fahrzeug sowie getrennte, von den anderen Seilen unabhängige Antriebseinrichtungen (1) für jedes Seil aufweist, dadurch gekennzeichnet, daß getrennte Energiequellen, die jede Antriebseinrichtung (1) unabhängig von den anderen speisen, und Einrichtungen zur Steuerung der Antriebsgeschwindigkeit von zumindest einer Antriebseinrichtung (1) für ein Seil in Abhängigkeit der von den verschiedenen Antriebseinrichtungen gemessenen unterschiedlichen Antriebsbeanspruchungen vorgesehen sind, wobei die Steuereinrichtungen auf die Antriebsgeschwindigkeit von zumindest einer Antriebseinrichtung (1) einwirken, um die unterschiedlichen Antriebsbeanspruchungen der Seile auf Werte zu bringen, die gleichen Laufgeschwindigkeiten für die Seile entsprechen.

2. Vorrichtung für den kontinuierlich ablaufenden synchronen Antrieb zweier endloser paralleler und als Zug- und Tragseile ausgebildeter Luftseile einer Transportanlage in derselpben Richtung, wobei die Vorrichtung im Betrieb zumindest ein in einer Linie an die Seile angekoppeltes Fahrzeug und insbesondere eine Reihe von Fahrzeugen, etwa Kabinen, die in regelmäßigen Abständen voneinander entlang der Linie verteilt sind, sowie zwei getrennte und unabhängige Antriebseinrichtungen (1a, 1b), eine pro Seil, aufweist, dadurch gekennzeichnet, daß zwei getrennte und voneinander unabhängige Energiequellen (2a, 2b) jede Antriebseinrichtung (1a, 1b) unabhängig von der anderen speisen, daß Einrichtungen (3) zum Erfassen einer Veränderung der Antriebsbeanspruchung von zumindest einem Seil in bezug auf die anfängliche Beanspruchung, bei der die Seile mit derselben Geschwindigkeit laufen, und Einrichtungen (4) vorgesehen sind, die zumindest ein Signals S für die Korrektur der Antriensgeschwindigkeit von zumindest einem der zwei Seile aussenden, wobei dieses Signal in seinem Absolutwert zur ermittelten Veränderung der Antriebsbeanspruchung von zumindest einem Seil proportional ist und die Geschwindigkeit im Sinne einer Rückkehr der Beanspruchung zu ihrem Anfangswert korrigiert.

3. Vorrichtung nach Anspruch 2, dadurch gekennzeichnet, daß die Erfassungseinrichtungen (3) die Veränderung der Beanspruchung für jedes Seil ermitteln.

4. Vorrichtung nach Anspruch 3, dadurch gekennzeichnet, daß die Erfassungseinrichtungen (3) eine Veränderung D der Differenz $\Delta$ E zwischen den Antriebsbeanspruchungen der Seile in bezug auf die anfängliche Differenz $\Delta$ Eo zwischen diesen Beanspruchungen, bei der die Geschwindigkeiten der Seile gleich sind, erfassen, und daß die Sendeeinrichtungen (4) ein Geschwindigkeitskorrektursignal S aussenden, welches im Absolutwert proportional zu dieser Veränderung D ist, wobei die Korrektur in die Richtung einer Aufhebung der Veränderung D erfolgt.

5. Vorrichtung nach einem der Ansprüche 1 bis 4, dadurch gekennzeichnet, daß jede Antriebseinrichtung (1) aus einem Gleichstrommotor besteht, der eine Seilantriebsscheibe (5) in Drehung versetzt, wobei jede Energiequelle (2) aus einer unabhängigen elektrischen Gleichstromversorgung, insbesondere Thyristorbrücken besteht, und daß die Vorrichtung Sendeeinrichtungen (4) zur Aussendung eines Signals S für die Korrektur der Rotorspeisespannung U von mindestens einem der Motoren (2) aufweist, wobei dieses Signal S im Absolutwert proportional ist zur Differenz D zwischen der gemessenen Differenz $\Delta$ I zwischen den Induktionsstromstärken der beiden Motoren (2) und der anfänglichen Differenz $\Delta$ Io zwischen diesen Stromstärken, bei der die Seilgeschwindigkeiten gleich sind, wobei die Spannungskorrektur in die Richtung einer Aufhebung der Differenz D erfolgt.

6. Vorrichtung nach Anspruch 5, dadurch gekennzeichnet, daß beim Zunehmen von $\Delta$ I = $I_a$ – $I_b$ das Signal S so groß ist, daß die Differenz $\Delta$ U = $U_a$ – $U_b$ zwischen den Speisespannungen der Motoren (2) abnimmt, sodaß die Differenz $\Delta$ V = $V_a$ – $V_b$ zwischen den Geschwindigkeiten der Seile kleiner wird.

7. Vorrichtung nach einem der Ansprüche 4 bis 6, dadurch gekennzeichnet, daß Einrichtungen (6) zur Messung der Antriebageschwindigkeit der Seile und Einrichtungen (7) zur anfänglichen Regelung des von den Sendeeinrichtungen (4) ausgestrahlten Signals S vorgesehen sind, wobei die Regeleinrichtungen (7) eine Eichung der Sendeeinrichtungen (4) in Abhängigkeit vom Anfangswert der Differenz $\Delta$ Eo zwischen den Antriebsbeanspruchungen und insbesondere vom Anfangswert der Differenz $\Delta$ Io zwischen den Speisestromstärken ermöglichen.

8. Vorrichtung nach einem der Ansprüche 1 bis 7, dadurch gekennzeichnet, daß die Einrichtungen (3, 4) zur Steuerung der Geschwindigkeit, insbesondere der Speisespannung, auf die Antriebsgeschwindigkeit aller Seile außer einem einwirken, wobei das nicht gesteuerte Seil eine Bezugsfunktion aufweist und mit der Nenngeschwindigkeit angetrieben wird.

9. Vorrichtung nach einem der Ansprüche 4 bis 8, dadurch gekennzeichnet, daß die Einrichtungen (4) zum Sanden von zumindest einem Korrektursignal Mittel (8) zur Regelung der Geschwindigkeit für die Reaktion, mit der sie nach einer Veränderung D ein Signal S aussenden, aufweisen.

10. Vorrichtung nach einem der Ansprüche 4 bis 9, dadurch gekennzeichnet, daß die Einrichtungen (4) zum Aussenden von zumindest einem Korrektursignal S Mittel zur Regelung des Verstärkungsgrades des Absolutwerts des Signals S als Funktion der Veränderung D aufweisen.

11. Verfahren zur automatischen Regelung des kontinuierlich ablaufenden synchronen Antriebs mehrerer paralleler Seile, zumindest Zugseile einer Transportanlage, in derselben Richtung, wobei die Vorrichtung im Betrieb zumindest ein in einer Linie an die zumindest als Zugseile ausgebildeten Seile angekoppeltes Fahrzeug aufweist und die Seile für ein Ablaufen unabhängig voneinander durch eigene Antriebseinrichtungen für jedes Seil angetrieben werden, dadurch gekennzeichnet, daß die Seile von den Antriebseinrichtungen ausgehend von eigenen Energiequellen für jedes Seil angetrieben werden, wobei die für den Antrieb jedes Seiles erforderliche Beanspruchung kontinuierlich gemessen und die Antriebsgeschwindigkeit von zumindest einem Seil als Funktion der gemessenen Beanspruchungen gesteuert wird, indem man auf diese Geschwindigkeit so einwirkt, daß die unterschiedlichen für den Antrieb der Seile erforderlichen Beanspruchungen auf Werte gebracht werden, die gleichen Laufgeschwindigkeiten der Seile entsprechen.

12. Verfahren für die automatische Regelung des kontinuierlich ablaufenden synchronen Antriebs zweier endloser parallaler und als Zug- und Tragseile ausgebildeter Luftseile einer Transportanlage in derselben Richtung, wobei die Vorrichtung im Betrieb zumindest ein in einer Linie an die Seile angekoppeltes Fahrzeug und insbesondere eine Reihe von Fahrzeugen, die in regelmäßigen Abeständen voneinander entlang der Linie verteilt sind, aufweist, wobei jedes Seil durch eine eigene getrennte Antriebseinrichtung (1a, 1b), die von der eigenen Antriebseinrichtung für das andere Seil unabhängig ist, für das Ablaufen angetrieben wird, dadurch gekennzeichnet, daß jedes Seil durch eine Antriebseinrichtung (1a, 1b) für ein Ablaufen angetrieben wird, ausgehend von einer eigenen Energiequelle (2a, 2b) für dieses Seil, die getrennt und unabhängig von der eigenen Antriebseinrichtung (1a, 1b) und der Energiequelle für das andere Seil ist, daß die für den Antrieb jedes Seils erforderliche Beanspruchung permanent gemessen wird, daß die Differenz $\Delta E$ zwischen diesen Beanspruchungen gebildet wird, daß diese gemessene Differenz $\Delta E$ mit einem Anfangswert $\Delta Eo$ verglichen wird, bei dem die Seilgeschwindigkeiten gleich sind, und daß die Antriebsgeschwindigkeit von zumindest einem der Seile korrigiert wird, wenn sich die gemessene Differenz $\Delta E$ von der Anfangsdifferenz $\Delta Eo$ unterscheidet, um die Gleichheit zwischen diesen Differenzen $\Delta E$ und $\Delta Eo$ wiederherzustellen.

13. Verfahren nach Anspruch 11 oder 12, dadurch gekennzeichnet, daß bei der einen Gleichstrommotor (1) für den Seilantrieb und eine elektrische Speiseeinrichtung (2) für den Gleichstrommotor aufweinsenden Anlage die Differenz $\Delta I$ zwischen den Induktionsstromstärken der beiden Motoren (1a, 1b) gemessen und gebildet wird, daß diese gemessene Differenz $\Delta I$ mit einer Anfangsdifferenz $\Delta Io$ verglichen wird, für die zuvor festgesetzt wurde, daß die entsprechenden Seilgeschwindigkeiten gleich sind, und daß die Speisespannung für zumindest einen der Motoren (1) so gesteuert wird, daß die gemessene Differenz $\Delta I$ permanent in Übereinstimmung mit der Anfangsdifferenz $\Delta Io$ bleibt.

14. Verfahren nach Anspruch 12 oder 13, dadurch gekennzeichnet, daß zur Bestimmung der Anfangsdifferenz $\Delta Eo$ zwischen den Beanspruchungen, die insbesondere durch die Anfangsdifferenz $\Delta Io$ zwischen den Induktionsstromstärken repräsentiert ist, die Seile ohne einem daran angekoppeltem Fahrzeug für ein Ablaufen mit derselben Geschwindigkeit angetrieben werden, daß die Geschwindigkeiten der Seile gemessen und die Geschwindigkeit von zumindest einem Seil so korrigiert wird, daß alle Seile synchron mit im wesentlichen konstanter, der Nenngeschwindigkeit der Anlage entsprechender Geschwindigkeit angetrieben werden und daß die Beanspruchungen, insbesondere die Induktionsstromstärken, die für den Antrieb der Seile unter diesen Bedingungen erforderlich sind, gemessen werden.

15. Verfahren nach einem der Anspruch 11 bis 14, dadurch gekennzeichnet, daß die Geschwindigkeit, insbesondere die Speisespannung für alle Seile außer einem gesteuert wird, wobei das Seil, dessen Geschwindigkeit bzw. dessen Speisespannung nicht gesteuert wird als Bezugsseil fungiert und mit der Nenngeschwindigkeit für den Antrieb der Fahrzeuge in der Linie angetrieben wird.

## Claims

1. Drive device with continuous synchronous similarly-directed run-out of several parallel at least hauling cables of a transporting facility comprising, whilst operating, at least one vehicle coupled in line to the said at least hauling cables, and separate means (1) for driving each cable independently of the others, characterised in that it comprises separate energy sources supplying each drive means (1) independently of the others, means of controlling the drive speed of at least one means (1) of driving a cable as a function of the various measured drive forces of the various drive means, the control means acting on the drive speed of at least one drive means (1) in order to reduce the various cable-drive forces to values corresponding to equal cable run-out speeds.

2. Drive device with continuous synchronous similarly-directed run-out of two endless overhead parallel carrying-hauling cables of a transporting facility comprising, whilst operating, at least one vehicle coupled in line — in particular a series of vehicles such as cabs, regularly spaced and spread out along the line — to the said cables, and two independent separate drive means (1a, 1b), one for each cable, characterised in that it comprises two separate energy sources (2a, 2b) supplying each drive means (1a, 1b) independently of the other, means (3) of detecting a variation in the drive force of at least one cable relative to the initial force for which the cables run out at the same speed, this being their nominal speed, and means (4) emitting at least one signal S for correcting the drive speed of at least one of the two cables, this signal being proportional in absolute value to the variation detected in the drive force of at least one cable and correcting the speed in the direction of returning the force to its initial value.

3. Device according to Claim 2, characterised in that the means (3) of detection are able to detect the variation in the force of each of the cables.

4. Device according to Claim 3, characterised in that the means (3) of detection detect a variation D in the difference $\Delta E$ between the cable-drive forces relative to the initial difference $\Delta E_o$ between these forces and for which the speeds of the cables are equal, and in that the means (4) of emission emit a speed-correction signal S proportional in absolute value to this variation D, the correction being made in the direction of cancelling the variation D.

5. Device according to any one of Claims 1 to 4, characterised in that each drive means (1) consists of a direct current motor driving in rotation a drive pulley (5) for a cable, each energy source (2) consists of an independent direct-current electrical supply — in particular with thyristor bridges —, and in that the device comprises means (4) of emitting at least one signal S for correcting the armature supply voltage U of at least one of the motors (2), this signal S being proportional in absolute value to the difference D between the measured difference $\Delta I$ between the armature currents of the two motors (2) and the initial difference $\Delta I_o$ between these currents and for which the speeds of the cables are equal, the voltage correction being made in the direction of cancelling the difference D.

6. Device according to Claim 5, characterised in that if $\Delta I = I_a - I_b$ increases, the signal S is such that the difference $\Delta U = U_a - U_b$ between the armature supply voltages of the motors (2) decreases, so that the difference $\Delta V = V_a - V_b$ between the speeds of the cables decreases.

7. Device according to any one of Claims 4 to 6, characterised in that it comprises means (6) of measuring the cable-drive speed, and means (7) of initial adjustment of the signal S emitted by the means (4) of emission, these means (7) of adjusment allowing the means (4) of emission to be calibrated as a function of the initial value of the difference $\Delta E_o$ between the drive forces, in particular as a function of the initial value of the difference $I_o$ between the armature currents.

8. Device according to any one of Claims 1 to 7, characterised in that the means (3, 4) of controlling the speed — in particular of the supply voltage — act on the drive speed of all the cables except one, the cable whose speed — in particular the supply voltage — is not controlled playing a reference role and being driven at the nominal speed.

9. Device according to any one of Claims 4 to 8, characterised in that the means (4) of emitting at least one correction signal S comprise means (8) of adjusting the speed of reaction with which they emit a signal S after detection of a variation D.

10. Device according to any one of Claims 4 to 9, characterised in that the means (4) of emitting at least one correction signal S comprise means (9) of adjusting the amplification gain of the absolute value of the signal S as a function of the variation D.

11. Method of automatically adjusting the drive with continuous synchronous similarly-directed run-out of several parallel at least hauling cables of a transporting facility comprising, whilst operating, at least one vehicle coupled in line to the said at least hauling cables, the said cables being run out independently of one another by drive means specific to each cable, characterised in that said cables being run out by the drive means based on energy sources specific to each cable, the force required for driving each of the cables is continuously measured and the drive speed of at least one of the cables is controlled as a function of the measured forces, by acting on this speed in order to reduce the various forces required for driving the various cables to values corresponding to equal cable run-out speeds.

12. Method of automatically adjusting the drive with continuous synchronous similarly-directed run-out of two endless parallel carrying-hauling overhead cables of a transporting facility comprising, whilst operating, at least one vehicle coupled in line — in particular a series of vehicles regularly spaced and spread out along the line — to the said cables, each cable being run out by a drive means (1a, 1b) specific to this particular cable and independent of the drive means (1a, 1b) specific to the other cable, characterised in that each cable being run out by a drive means (1a, 1b) based on an energy source (2a, 2b) specific to this cable and separate and independent of the drive means (1a, 1b) and of the energy source (2a, 2b) specific to the other cable, the force required for driving each cable is continuously measured, the difference $\Delta E$ between these forces is taken, this measured difference $\Delta E$ is compared with an initial value $\Delta E_o$ for which the speeds of the cables are equal, and the drive speed of at least one of the two cables is corrected as soon as the measured difference $\Delta E$ differs from the initial difference $\Delta E_o$ in order to re-establish equality between these differences $\Delta E$ and $\Delta E_o$.

13. Method according to either of Claims 11 or 12, characterised in that the facility comprising a cable-drive direct-current motor (1) and a direct-current motor electrical supply (2), the difference $\Delta I$ in the armature currents of two motors (1a, 1b) is measured and taken, this measured difference $\Delta I$ is compared with an initial difference $\Delta I_o$ for which it was previously determined that the corresponding cable speeds are the same, and the supply voltage of at least one of the motors (1) is controlled so that the measured differ-

ence $\Delta$ I remains permanently equal to the initial difference $\Delta I_o$.

14. Method according to either of Claims 12 or 13, characterised in that, in order to determine the initial difference $\Delta E_o$ between the forces, — in particular represented for the initial difference $\Delta I_o$ between the armature currents —, the cables are run out at the same speed without any vehicle being coupled to the cables, the speeds of the cables are measured and the speed of at least one cable is corrected so that all the cables run out synchronously at substantially constant speed equal to the nominal speed of the facility, and the forces — in particular the armature currents — required for driving the cables under these conditions are measured.

15. Method according to any one of Claims 11 to 14, characterised in that the speed — in particular the supply voltage — is controlled of all the cables except one, the cable whose speed — in particular the supply voltage — is not controlled playing a reference role and being driven at the nominal speed for driving the vehicles in line.

FIGURE   UNIQUE

EP 0 293 296 B1